# EUROPEAN PATENT APPLICATION

(11) **EP 1 280 314 A2**
(43) Date of publication of application: **29.01.2003**
(21) Application number: 02015941.4
(22) Date of filing: 17.07.2002
(51) Int. Cl.: H04L 29/06

(54) **Method and apparatus for providing selective delivery of notifications to users of multiple devices over a network**

(30) Priority: 26.07.2001 US 916608
(71) Applicant: Openwave Systems Inc., Redwood City, CA 94063 (US)
(72) Inventor: Sunit, Lohtia, Cherry Hill, NJ 08003 (US)
(74) Representative: Jehle, Volker Armin

(57) **Abstract**

A network based notification system to provide notifications to users of multiple devices comprises a registration server and a notification server. The registration server maintains a profile of each user, which contains information used to identify the various devices of each user. In response to receiving a notification message for a user from a remote network site, the registration server accesses the user profile and other information to determine at which of the devices of the user the user is present, if any. The notification server then selects one of the devices at which the user is present and sends a notification message for the user at the selected device. If notification is unsuccessful, notification is attempted at another one of the user's devices, if possible.

## Description

### FIELD OF THE INVENTION

The present invention pertains to providing notification services to users of communication and/or processing devices. More particularly, the present invention relates to a technique for providing selective delivery of notifications to users of multiple devices over a network.

### BACKGROUND OF THE INVENTION

Notification services enable users of computer systems, cellular telephones, personal digital assist dance (PDAs), and other communications and/or processing devices to receive timely information over a network. For example, notification services allow users to receive real-time stock quotes, traffic reports, weather forecasts, and other important information over the Internet, wireless telecommunications networks, and other networks. A notification may take the form of an electronic mail (e-mail) message, a short message service (SMS) message, or any of various other mechanisms available using a conventional computer system or communication device (e.g., Yahoo! Alert). Notification messages of this sort are typically generated by World Wide Web sites or other sites on the Internet.

It is becoming increasingly common for users to own two or more devices on which they wish to receive notifications. For example, it is not uncommon for a given user to own a desktop personal computer (PC), a cellular telephone, and a PDA. Unfortunately, notification services today are quite limited, in that they simply send a notification to one or more predetermined device addresses when a trigger criterion is met. A problem with this approach is that the user often receives the same notification message multiple times, once at each of his registered devices. Providing multiple redundant notifications to a user can cause confusion for the user. Furthermore, it is unnecessarily time-consuming for the user to have to devote attention to redundant notifications and to delete them from device memories.

### SUMMARY OF THE INVENTION

The present invention includes a method and apparatus for providing notification to a user having multiple devices. The method includes determining automatically at which of the devices the user is present, if any, and sending a notification message for the user to one of the devices at which the user was determined to be present, in response to a predefined trigger event, where such device is selected based on a profile of the user.

Other features of the present invention will be apparent from the accompanying drawings and from the detailed description which follows.

### BRIEF DESCRIPTION OF THE DRAWINGS

The present invention is illustrated by way of example and not limitation in the figures of the accompanying drawings, in which like references indicate similar elements and in which:

Figure 1 shows a logical arrangement of elements in a network environment in accordance with the present invention;

Figure 2 shows a physical arrangement of elements in a network environment in accordance with the present invention;

Figures 3A and 3B form of flow diagram illustrating a process of providing selective delivery of notifications to a user of multiple devices; and

Figure 4 is a high-level block diagram of a processing system which may represent any of the devices shown in Figures 1 and 2.

### DETAILED DESCRIPTION

A method and apparatus for providing selective delivery of notifications to users of multiple devices over a network are described. Note that in this description, references to "one embodiment" or "an embodiment" mean that the feature being referred to is included in at least one embodiment of the present invention. Further, separate references to "one embodiment" in this description do not necessarily refer to the same embodiment; however, neither are such embodiments mutually exclusive, unless so stated and except as will be readily apparent to those skilled in the art. For example, a feature, structure, act, etc. described in one embodiment may also be included in other embodiments. Thus, the present invention can include a variety of combinations and/or integrations of the embodiments described herein.

As described in greater detail below, a network-based notification system includes a notification server and a session initiation protocol (SIP) (or some other, similar multimedia protocol) -enabled registration server. The notification system maintains a profile of each user, which contains information used to identify the various devices of each user. In response to receiving a notification message for a user from a remote network site, the notification system accesses the user's profile and other devices on the network to determine at which of the devices of the user the user is "present", if any. In the specification, the user is considered to be "present" on device is that device is online and its appropriate application (if any) is running. The notification system then selects one of the devices at which the user is present, if any, based on a user preference or other information in the user's profile, and sends a notification message for the user at the selected device. Delivery of the notification to the user will result in an acknowledgement being returned to the notification system. In that case, the notification system may provide a delivery confirmation to the original source of the notification. If no acknowledgment of the notification is received by notification system, the notification system attempts to provide notification to the user at each of the user's registered devices, successively, until acknowledgment is received, or all devices have been tried or a user-specified device limit has been reached.

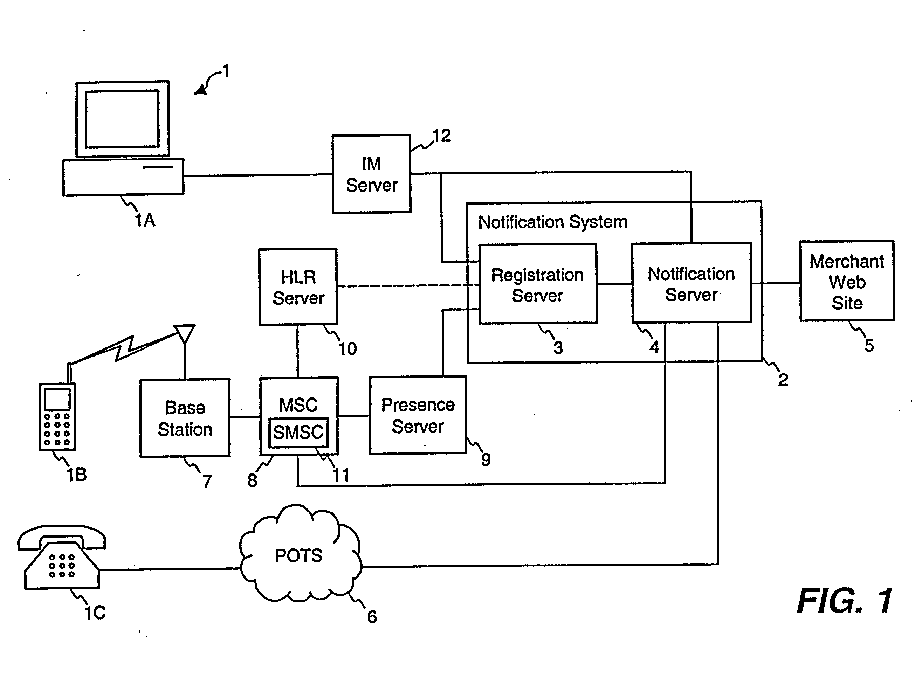

Figure 1 shows a logical arrangement of elements in a network environment, according to one embodiment of present invention. A particular user has a number of communication and/or processing devices 1, which in the embodiment shown are a desktop PC 1A, a cellular telephone 1B, and a conventional POTS (Plain Old Telephone Service) telephone 1C. Other examples of such user devices can be a PDA, a two-way pager, or other similar devices. Each of the user's devices 1 is connected (through other devices) to a notification system 2, which includes a registration server 3 and a notification server 4. The notification system 2 may be owned and/or operated by the user's Internet service provider (ISP), for example, or any other communications service provider of the user. The registration server 3 and the notification server 4 may be implemented in the same physical machine, or they may be distributed between two or more physical machines, which can be connected to each other by a network. In one embodiment, the registration server 3 and the notification server 4 are separate software processes of one or more physical computer systems.

The user wishes to receive notifications, which comprise timely information on essentially any subject specified by the user, from a "merchant". In this context, the term "merchant" is used very generally, for convenience, to mean any person, group, corporation, or entity from which a user may wish to receive a notification; it is not limited to a provider of goods or services. The merchant maintains a network-connected site 5, which generates the notifications at appropriate times, and which may be, for example, a conventional World Wide Web site. In other embodiments, notifications may be generated by an entity other than a Web site, such as a network server dedicated for providing notifications. In a general sense, the notification system 2 proxies notifications from the merchant web site 5 to selected user devices 1, and optionally, proxies notification acknowledgments back to the merchants web site 5.

The user may receive a notification from the notification system 2 at his PC 1A in the form of an email, or in the form of an instant (text) message using any conventional instant messaging (IM) client (not shown) on the PC and corresponding IM server, such as provided by Yahoo! or America On-Line (AOL). The user may also receive a notification from the notification system 2 at his conventional (POTS) telephone 1C via the POTS telephone network 6, in audible form (e.g., recorded are synthesized speech) as a standard telephone call.

In addition, the user may receive a notification from the notification system 2 at his cellular telephone 1B (or other portable device), via a conventional wireless telecommunications network ("wireless network"), in the form of an email, an SMS (text) message, a wireless access protocol (WAP) -Alert, an audible telephony message (e.g., recorded or synthesized speech), or any other suitable mechanism. The wireless network includes a number of cellular base stations 7 coupled to a mobile switching center (MSC) 8 coupled to a presence server 9. The wireless network also includes a Home Location Register (HLR) server 10 operatively coupled to the MSC 8 and possibly also coupled to the registration server 3. The purpose of the presence server 9 is to maintain information on whether the cellular telephone 1B and other portable devices are "present" on the wireless network at any point in time, i.e., whether a device is online. Normally, a device which operates on the wireless network is considered to be present whenever it is powered on and/or in the coverage area. The presence server 9 may also maintain information on the geographic location of the cellular telephone 1B and other devices, although such functionality is not necessary for purposes of the present invention. The MSC 8 includes an SMS Center (SMSC) 11, which can provide SMS messages to the cellular telephone 1B and other devices on the wireless network via base stations 7. The purpose of the HLR server 10 is to maintain users' wireless network profile information, such as user authentication information, user current registration information, users' "forward to" numbers, etc. Hence notifications may be sent from the notification system 2 to the cellular telephone 1B in the form of email messages, SMS (text) messages, or audible messages (e.g., using recorded or synthesized speech).

In general, the registration server 3 also maintains a profile of each user (i.e., each subscriber), which includes information that identifies in some manner all of the devices at which the user is willing to receive notifications. The SIP-enabled registration server 3 uses SIP (or any other suitable protocol) to maintain the user's identity in various different networks, and links these identities together. In addition, the registration server 3 maintains the user's presence information on each of the user's devices by interfacing to various network elements. Presence on a desktop or laptop computer may be determined by a client (e.g., an IM client) running on the user's PC 1A. More specifically, presence for the PC 1A may be determined by any PC client accessing a server with a known identifier (ID) of the user. In the case of IM, for example, the IM client may automatically send a message to the registration server 3 when the client application is started. Alternatively, the registration server 3 may query the IM server 12 to determine whether the user is currently on-line. The registration server 3 can determine the user's presence on a wireless device by interfacing with the presence server 9, or alternatively, by interfacing with the HLR server 10 to determine where the user is active or inactive in the wireless network. The HLR server 10 typically has information indicating whether the user has been away from the coverage area or has turned the handset off. The registration server 3 may query such information using any of various standard wireless network interface protocols, such as TIA-41, GSM-MAP (Customized Applications for Mobile network Enhanced Logic, i.e. "CAMEL") or PDA network interface.

The notification server 4 sends notification messages for the user in response to a predefined trigger criterion being met. The trigger criterion may be, for example, the receipt of a notification message from a remote network site, such as merchant web site 5. When the trigger criterion is met, the notification server 4 invokes registration server 3, causing the registration server 3 to determine the user's address and to identify the devices 1 on which the user is registered in the user's profile. The user can specify in his profile whether delivery of notification is to be guaranteed (user acknowledgment required) or non-guaranteed (best effort). The notification server 4 then forwards the notification to a selected device 1 of the user where the user is present (if any). Selection of a device where the user is present may be done according to a user-specified prioritization of devices in the user's profile, a default prioritization, or any other suitable prioritization. If guaranteed delivery is requested, the notification server 4 may include appropriate command strings in the notification message, so that an automatic or manual message is returned to the notification server 4 when the notification message is delivered to the user.

A user may be considered to be "present" at the POTS telephone 1C if the POTS telephone 1C is in the off-hook condition (in use). Even if the POTS telephone 1C is in the on-hook condition (not in use), it may be desirable to select it as a default last resort when the user is not present on any other device. A notification may be provided to the user at the POTS telephone 1C in audible form (e.g., recorded are synthesized speech) as a standard telephone call.

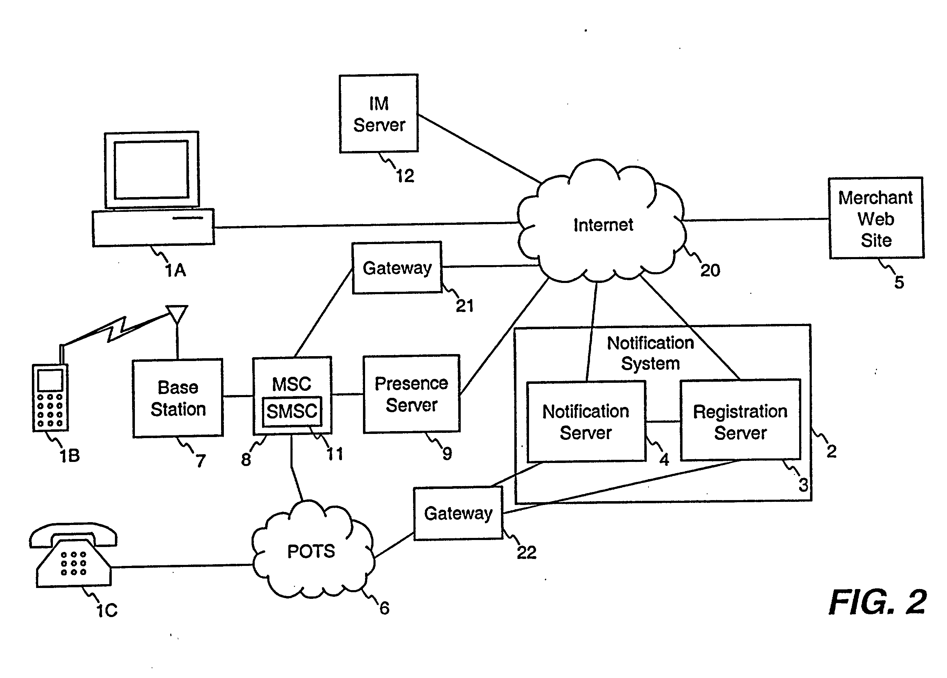

Figure 2 shows one possible physical arrangement of the elements shown in Figure 1. As shown, the PC 1A, registration server 3, notification server 4, merchant web site 5, presence server 9, and IM server 12, are each coupled to the Internet 20. Note that in other embodiments, the Internet 20 may be replaced by some other type of network or combination of networks. The MSC 8 is connected to the Internet 20 through a gateway 21, which is a conventional network device that converts the language(s) and/or protocol(s) between those used on the Internet 20 and those used on the wireless network. The MSC 8 is also connected to the POTS network 6 to allow telephonic communication between users on the wireless network and users on the POTS network 6. The notification server 4 is also connected to the POTS network 6 via a separate gateway 22, which performs similar conversions as the first gateway 21 and allows the registration server 3 to determine when the POTS telephone 1C is in use (i.e., by detecting an off-hook condition).

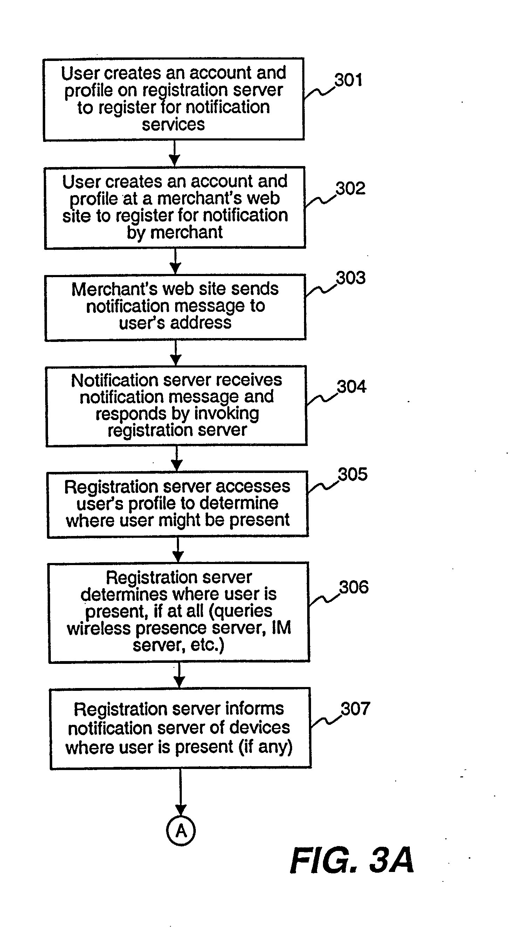

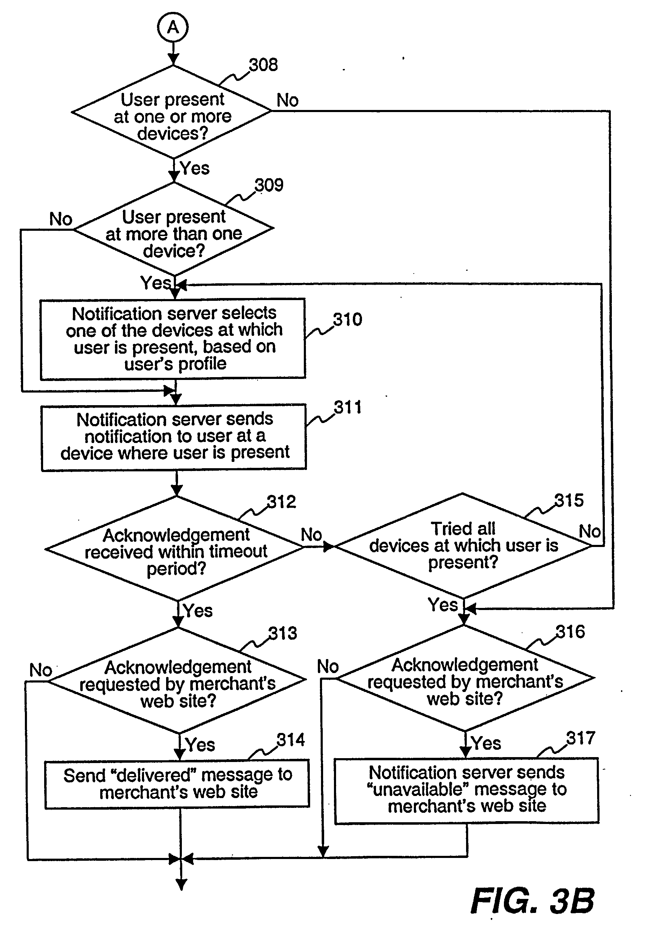

Figures 3A and 3B collectively show a process of providing selective delivery of notifications to a user of multiple devices, according to one embodiment of the above-described technique. Initially, at block 301 the user creates an account and sets up a profile on the registration server 3, to register for notification services. The user profile will contain a universal address for the user (e.g., user_id@host), which may be the user's SIP ID provided by the service provider operating the notification system 2. It is assumed that the user has already created another profile with the service provider which has detailed information about the user's universal address. Also stored in the user's profile, in association with the user's universal address, are corresponding addresses or other equivalent identifiers for each of the user's other devices, e.g., a mobile telephone number, a POTS telephone number, a WAP user ID, an instant message ID, etc.

At block 302 the user creates an account and sets up a profile at a merchant web site 5, to register for notification on some topic. For example, the user might register to be notified when there is an available tee time at a particular golf course. At block 303, when timely information becomes available (e.g., when there is an available tee time), the merchants web site 5 sends a notification message to the service provider using the user's universal address, such that the notification message is received by the notification server 4. The notification server 4 responds by invoking the registration server 3 at block 304. Invocation of the registration server 3 causes the registration server 3 to access the user's profile at block 305, using the universal address, to determine where the user is potentially present, i.e. to determine the various addresses and device identifiers corresponding to the users multiple devices 1. At block 306, the registration server 3 determines where the user actually is present, if anywhere. Block 306 may include querying the wireless presence server 9 and the IM server 12 to determine whether the user is present on a mobile device 1B or is on-line using an IM application, respectively.

At block 307, the registration server 3 informs the notification server 4 of the devices 1 (using addresses or other identifiers) where the user is present, if any. If the registration server 3 determined the user is not present at any device, the process proceeds from block 316. If acknowledgment was requested by the merchants web site 5 (block 316), then the process ends with block 317, in which the notification server 4 sends and "unavailable" message to the merchant web site 5, indicating that the notification delivery failed. If acknowledgment was requested by the merchants web site 5, the process simply ends with block 316. If the registration server 4 determines the user is present at only one device ("yes" at block 308, "no" at block 309), the process proceeds from block 311. At block 311 the notification server 4 sends a notification to the user at the device 1 where the user is present and waits for an acknowledgment.

Such acknowledgement may be generated manually by the user or it may be generated automatically. For example, in the case of a notification sent using IM, the user may activate an "acknowledge" button upon receiving the notification, which causes a message to be sent to the notification server 4. Alternatively, the IM message may contain a uniform resource locator (URL) or other address of the merchant web site 5, which the user can access to perform some function, e.g., to reserve a tee time. Once the user activates the URL, an acknowledgment is automatically sent to the notification server 4. As another example, for a mobile device using two-way SMS, the user may simply send an SMS acknowledgment. For one-way SMS, the SMS message may contain certain key sequences, which the user can press on the mobile device as an acknowledgment of the notification. For WAP-Alert messages, the user may send an acknowledgement via WAP. For voice calls, the user may press one or more dual tone multi-frequency (DTMF) buttons during the notification call or may speak a phrase to send acknowledgment. A DTMF receiver or automatic speech recognition engine on the other side of the call then sends an acknowledgment to the notification server 4.

Referring still to Figure 3B, if the registration server 3 determined the user is present at more than one device 1 ("yes" at block 308, "yes" at block 309), the process continues from block 310, in which the notification server 4 selects one of the devices 1 at which the user is present, based on a prioritization specified in the user's profile, a default prioritization, or any other suitable selection algorithm. The process then continues from block 311, as described above, by sending a notification for the user at the selected device 1.

Following block 311, if an acknowledgement of the notification is received by the notification server 4 within the predefined timeout period (block 312), and if an acknowledgement was requested by the merchants web site 5 (block 313), then the process ends with block 314, in which a "delivered" message is sent to the merchant web site 5, indicating successful notification of the user. If no acknowledgment was requested by the merchant web site 5, the process simply ends with block 313. If an acknowledgement of the notification was not received within the timeout period at block 312, but there are additional devices that which the user is present (block 315), the process loops back to block 310, described above. If a timely acknowledgement was not received from any device at which the users present (blocks 312 and 315), the process continues from block 316, as described above.

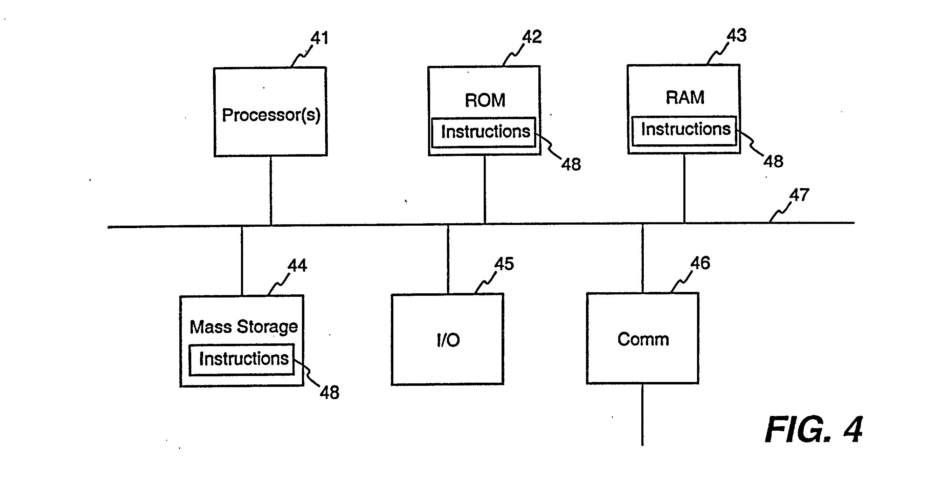

Figure 4 is a block diagram of a processing system that may represent any of the communication and/or processing devices shown in Figures 1 and 2 (e.g., user devices 1, servers 3 and 4, etc.). The illustrated processing system includes one or more processors 41, i.e. a central processing unit (CPU), read-only memory (ROM) 42, and random access memory (RAM) 43, each connected to a bus system 47. The processor(s) 41 may be, or may include, one or more programmable general-purpose or special-purpose microprocessors, digital signal processors (DSPs), application specific integrated circuits (ASICs), programmable logic devices (PLDs), or a combination of such devices. The bus system 47 includes one or more buses or other connections, which may be connected to each other through various bridges, controllers and/or adapters, such as are well-known in the art. For example, the bus system 47 may include a "system bus", which may be connected through one or more adapters to one or more expansion buses, such as a Peripheral Component Interconnect (PCI) bus, HyperTransport or industry standard architecture (ISA) bus, small computer system interface (SCSI) bus, universal serial bus (USB), or Institute of Electrical and Electronics Engineers (IEEE) standard 1394 bus (sometimes referred to as "Firewire").

Also coupled to the bus system 47 are one or more mass storage devices 44, input/output (I/O) devices 45, and data communication devices 46. Mass storage device 44 may be, or may include, any one or more devices suitable for storing large volumes of data in a non-volatile manner, such as a magnetic disk or tape, magneto-optical (MO) storage device, or any of various forms of Digital Versatile Disk (DVD) or Compact Disk (CD) based storage, or a combination thereof.

Each data communication device 46 is a device suitable for enabling the processing system to communicate with remote devices and may be, for example, a conventional modem, a Digital Subscriber Line (DSL) modem, a cable modem, an Ethernet adapter, an Integrated Services Digital Network (ISDN) adapter, a wireless transceiver (e.g., in the case of a mobile device), a satellite transceiver, or the like. The I/O device(s) 45 may include, for example, a keyboard or keypad, a display device, and a pointing device (e.g., a mouse, trackball, or touchpad). Note, however, that such I/O devices may be unnecessary for certain devices and/or in certain embodiments. For example, a device which functions purely as a server does not necessarily require local I/O devices aside from a data communication device, particularly if the server is not intended to directly interface with a user or operator. Similarly, it may not be necessary or desirable to equip a mobile device with a mass storage device. Many other variations on the above described embodiment other possible. Further, it will be understood that the processing system may include other conventional components such as are well-known in the art.

The notification techniques described above may be implemented in software 48, which may reside, either partially or completely, in any of RAM 43, mass storage device 44 and/or ROM 42, as shown, or on a remote processing system.

Thus, a method and apparatus for providing selective delivery of notifications to users of multiple devices have been described. Although the present invention has been described with reference to specific exemplary embodiments, it will be evident that various modifications and changes may be made to these embodiments without departing from the broader spirit and scope of the invention as set forth in the claims. Accordingly, the specification and drawings are to be regarded in an illustrative sense rather than a restrictive sense.

## Claims

1. A method comprising:
determining automatically at which of a plurality of devices associated with a user, if any, the user is present; and
sending a notification message for the user to one of the devices at which the user was determined to be present, in response to a predefined trigger event, said one of the devices having been selected based on a profile of the user.

2. A method as recited in claim 1, further comprising selecting said one of the devices as a destination of the notification message based on the profile of the user.

3. A method as recited in claim 2, wherein the profile of the user indicates a preferred order of devices to which notifications for the user should be sent.

4. A method as recited in claim 1, wherein the predefined trigger event comprises receiving a notification message for the user from a remote system.

5. A method as recited in claim 1, wherein at least one of the plurality of devices of the user is a mobile device configured to operate on a wireless network.

6. A method as recited in claim 1, wherein at least one of the plurality of devices of the user is a computer connected to a wired computer network.

7. A method as recited in claim 1, wherein at least one of the plurality of devices of the user is a mobile device configured to operate on a wireless network; and at least one of the plurality of devices of the user is a computer connected to a wired computer network.

8. A method as recited in claim 7, wherein at least one of the plurality of devices of the user is a POTS telephone.

9. A method as recited in claim 1, wherein said determining automatically at which of a plurality of devices associated with a user, if any, the user is present comprises communicating with a presence server on a wireless network, to determine if the mobile device is present on the wireless network.

10. A method as recited in claim 1, wherein said determining automatically at which of a plurality of devices associated with a user, if any, the user is present comprises communicating with an instant messaging application used by the user.

11. A method as recited in claim 1, further comprising incorporating a hyperlink into the notification message, to enable the user to respond to notification by activating the hyperlink.

12. A method comprising:
maintaining a profile of a user, the profile including information indicative of a plurality of devices of the user;
receiving a first notification message for a user from a remote site on a network;
determining automatically at which of the plurality of devices the user is present, if any, using a profile of the user; and
consecutively sending a second notification message for the user to each of the devices at which the user was determined to be present, according to the profile of the user, until an acknowledgement of the second notification is received with respect to one of the devices, the second notification message being representative of the first notification message.

13. A method as recited in claim 12, wherein the profile of the user indicates a preferred order of the plurality of devices in which notifications for the user should be sent.

14. A method as recited in claim 13, further comprising selecting said one of the devices as a destination of the second notification message based on the profile of the user.

15. A method as recited in claim 12, wherein the remote site comprises a server on a computer network, and wherein each of the plurality of devices comprises a data processing device.

16. A method as recited in claim 15, wherein at least one of the devices is a mobile device configured to operate on a wireless network.

17. A method as recited in claim 16, wherein said determining automatically at which of the devices, if any, the user is present comprises communicating with a network element connected to a wireless network to determine if the mobile device is present on the wireless network.

18. A method as recited in claim 12, wherein said determining automatically at which of the devices the user is present comprises communicating with an instant messaging application used by the user.

19. A method as recited in claim 12, wherein said determining automatically at which of the devices the user is present comprises:
communicating with a presence server on the wireless network; and
communicating with an instant messaging application used by the user.

20. A method as recited in claim 12, wherein said determining automatically at which of the plurality of devices the user is present is done in response to receiving the notification message from the remote network site.

21. A method as recited in claim 12, wherein said determining automatically at which of the plurality of devices the user is present is done prior to receiving the notification message from the remote network site.

22. A method as recited in claim 12, wherein said determining automatically at which of the plurality of devices the user is present is done in response to receiving the first notification message.

23. A method as recited in claim 12, wherein said determining automatically at which of the plurality of devices the user is present is done prior to receiving the first notification message.

24. A method as recited in claim 12, further comprising incorporating a hyperlink into the second notification message, to enable the user to respond to notification by activating the hyperlink.

25. A method comprising:
maintaining a profile of a user, including information corresponding to a plurality of remote devices of the user;
receiving a first notification message for a user from a remote computer system on a data communication network;
accessing the profile of the user to identify the devices of the user;
determining automatically at which of the devices, if any, the user is present;
if the user is present at more than one of the devices, then selecting one of the devices at which the user was determined to be present, based on the profile of the user;
sending a second notification message for the user via a data communication network to the selected one of the devices, based on the first notification message;
waiting to receive an acknowledgement of the second notification message;
if an acknowledgement of the second notification message is not received, then
selecting another one of the devices at which the user is present, if any, based on the profile of the user, and
sending a third notification message for the user to said other one of the devices, based on the first notification message.

26. A method as recited in claim 25, wherein said determining automatically at which of the devices, if any, the user is present comprises communicating with a network element connected to a wireless network, to determine if a mobile device of the user is present on the wireless network.

27. A method as recited in claim 25, wherein said determining automatically at which of the devices, if any, the user is present comprises communicating with an instant messaging application used by the user.

28. A method as recited in claim 25, wherein said determining automatically at which of the devices, if any, the user is present comprises:
communicating with a presence server on the wireless network; and
communicating with an instant messaging application used by the user.

29. A method as recited in claim 25, wherein the profile of the user specifies a preferred order in which the plurality of remote devices should be contacted with a notification.

30. A method as recited in claim 25, further comprising incorporating a hyperlink into the notification message, to enable the user to respond to notification by activating the hyperlink.

31. A system comprising:
a registration server to maintain a profile of a user, the profile containing information corresponding to a plurality of remote devices of a user, and to determine automatically at which of the devices, if any, the user is present; and
a notification server to receive a first notification message for the user from a remote network site, to select one of the devices at which the user was determined to be present, and to send a second notification message for the user at the selected one of the devices, based on the first notification message.

32. A system as recited in claim 31, wherein the notification server further is to wait for an acknowledgement of the second notification message and, if an acknowledgement of the second notification message is not received, to select another one of the devices at which the user is present, if any, based on the profile of the user, and to send a third notification message for the user at said other one of the devices, based on the first notification message.

33. A system as recited in claim 31, wherein the registration server determines automatically at which of the devices, if any, the user is present by, at least in part, communicating with a network element on a wireless network, to determine if a mobile device of the user is present on the wireless network.

34. A system as recited in claim 31, wherein the registration server determines automatically at which of the devices, if any, the user is present by, at least in part, communicating with an instant messaging application used by the user.

35. A system as recited in claim 31, wherein the registration server determines automatically at which of the devices, if any, the user is present by, at least in part:
communicating with a presence server on the wireless network; and
communicating with an instant messaging application used by the user.

36. A system as recited in claim 31, wherein the profile of the user indicates a preferred order of the plurality of devices in which notifications for the user should be sent.

37. A system as recited in claim 36, wherein the notification server further is to select one of the devices at which the user was determined to be present as a destination of the second notification message, based on the profile of the user.

38. A system as recited in claim 31, wherein the notification server further is configured to incorporate a hyperlink into a notification message for the user, to enable the user to respond to notification by activating the hyperlink.

39. A processing system comprising:
a processor;
a data communication device to communicate data with a plurality of remote sources over a network under control of the processor; and
a storage facility including instructions for execution by the processor to cause the processing system to execute a process comprising:
maintaining a profile of a user, the profile including information corresponding to a plurality of devices of the user which are capable of communicating data with remote sites;
receiving a first notification message for a user from a remote site on the network;
in response to the first notification message, using the profile of the user to determine automatically at which of the devices the user is present, if any;
consecutively sending a second notification message for the user at each of the devices at which the user was determined to be present, based on the first notification message and according to the profile of the user, until an acknowledgement of the second notification is received with respect to one of the devices.

40. A processing system as recited in claim 39, wherein the profile of the user includes information indicative of an order in which notifications for the user should be sent to said devices.

41. A processing system as recited in claim 40, further comprising selecting said one of the devices as a destination of the second notification message based on the profile of the user.

42. A processing system as recited in claim 39, wherein the remote site comprises a server on a computer network, and wherein each of the plurality of devices comprises a data processing device.

43. A processing system as recited in claim 42, wherein at least one of the devices is a mobile device configured to operate on a wireless network.

44. A processing system as recited in claim 39, wherein said determining automatically at which of the devices, if any, the user is present comprises querying a presence server on a wireless network, to determine if a mobile device of the user is present on the wireless network.

45. A processing system as recited in claim 39, wherein said determining automatically at which of the devices the user is present comprises querying an instant messaging application used by the user.

46. A processing system as recited in claim 39, wherein said determining automatically at which of the devices the user is present comprises:
querying a presence server on the wireless network; and
querying an instant messaging application used by the user.

47. A processing system as recited in claim 39, wherein said determining automatically at which of the plurality of devices the user is present is done in response to receiving the notification message from the remote network site.

48. A processing system as recited in claim 39, wherein said determining automatically at which of the plurality of devices the user is present is done prior to receiving the notification message from the remote network site.

49. A processing system as recited in claim 39, further comprising incorporating a hyperlink into the notification message, to enable the user to respond to notification by activating the hyperlink.

50. An apparatus for notifying a user of a plurality of devices, the method comprising:
means for determining automatically at which of the plurality of devices the user is present, if any, based on a profile of the user; and
means for sending a notification message for the user to one of the devices at which the user was determined to be present in response to a predefined trigger event, said one of the devices having been selected based on the profile of the user.
